# EUROPÄISCHE PATENTSCHRIFT

(11) **EP 3 584 536 B1**
(45) Veröffentlichungstag und Bekanntmachung des Hinweises auf die Patenterteilung: **05.05.2021**
(21) Anmeldenummer: 18178464.6
(22) Anmeldetag: 19.06.2018
(51) Int. Cl.: G01C 21/20

(54) **TERRESTRISCHES BEOBACHTUNGSGERÄT MIT LAGEBESTIMMUNGSFUNKTIONALITÄT**
TERRESTRIAL OBSERVATION APPARATUS WITH POSE DETERMINING FUNCTIONALITY
APPAREIL D'OBSERVATION TERRESTRE À FONCTIONNALITÉ DE DÉTERMINATION DE POSE

(43) Veröffentlichungstag der Anmeldung: 25.12.2019
(73) Patentinhaber: Safran Vectronix AG, 9435 Heerbrugg (CH)
(72) Erfinder: KIRSCHNER, Holger, 9443 Widnau (CH)
(74) Vertreter: Kaminski Harmann

(56) Entgegenhaltungen:
- EP-A1- 2 916 106
- WO-A1-2015/160287

## Beschreibung

Die Erfindung betrifft ein Beobachtungsgerät mit einer Lagebestimmungsfunktionalität zur hochgenauen Bestimmung der räumlichen Lage und somit der Position und Orientierung (z.B. Euler-Winkel: Azimut, Elevations- und Rollwinkel) des Beobachtungsgerätes durch Auswertung eines aufgenommenen Kamerabildes des die Kamera umgebenden Terrains mittels der dreidimensionalen Karteninformation eines digitalen Terrainmodells (DTM).

Eine vollautomatische Bestimmung der räumlichen Lage eines Beobachtungsgerätes bietet Vorteile bei der Orientierung auf der Erdoberfläche, zum Beispiel bei der Fortbewegung in unbewohntem Gelände, bei der Steuerung von mit dem Beobachtungsgerät referenzierten autonomen Fahrzeugen (unmanned ground vehicle, UGV) oder unbemannten Flugkörpern (unmanned aerial vehicle, UAV) in geringer Flughöhe.

Aus dem Stand der Technik bekannte Probleme bei der Bestimmung der räumlichen Lage eines Beobachtungsgerätes oder einer Kamera mittels automatischem Auswerten terrestrischer Bilder der Erdoberfläche, wie beispielsweise Verdeckungen des Terrains durch Bäume/Gebäude/Fahrzeuge, wetterabhängige Farbe und Textur der Terrainflächen, Verwechslung von Wolken mit Terrainstrukturen usw. können zu einer stark fehlerbehafteten und ineffizienten Lagebestimmung führen oder diese gar verunmöglichen.

Eine solche Lagebestimmung eines Beobachtungsgerätes oder einer Kamera, welche auf einer Bestimmung einer Orientierung bzw. Position basiert (kartenreferenzierte Orientierung und Position) wird beispielsweise in der automatisierten Navigation von Fahrzeugen verwendet. Ein anderer Anwendungsbereich ist die Lagebestimmung entfernter Ziele durch geodätische Verfahren, wie Polarpunktaufnahme und Triangulation.

Bestehende Lagebestimmungen von Beobachtungsgeräten oder Kameras sollen dahingehend verbessert werden, dass diese mit hoher Winkelmessgenauigkeit (z.B. besser als 1 mil) und unter geringem Zeitaufwand im Bereich weniger Sekunden ausgeführt werden können. Zudem soll die entsprechende Lagebestimmung einem definierten Zeitpunkt zugeordnet werden können, wodurch eine Synchronisation im Bereich von Millisekunden ermöglicht wird.

Nachfolgend werden unterschiedliche aus dem Stand der Technik bekannte Methoden und Mittel zur Lagebestimmung vorgestellt.

### i.) Neigungsmessung:

Zur Bestimmung von Elevation und Rollwinkel wird oft eine Messung der Schwerefeldrichtung (Neigungsmessung) beispielsweise mittels Beschleunigungssensoren verwendet.

### ii.) Digitaler Magnetkompass (digital magnetic compass DMC) :

Der Digitale Magnetkompass stellt eine Kombination einer Neigungsmessung mit einer Messung der Richtung des Erdmagnetfelds dar. Zusätzlich zu den Möglichkeiten der Neigungsmessung (siehe oben) wird damit eine Messung des Azimuts erreicht, d.h. es wird die komplette Orientierung (drei Euler-Winkel) gemessen. Dabei wird die Richtung zwingend in Bezug auf die magnetische Nordrichtung bestimmt.

### iii.) Gyro Compass

Die Nordrichtung kann durch einen Kreiselkompass (Gyro) bestimmt werden, indem die Drehung der Erde als Referenz für geographisch Nord verwendet wird. Dafür wird der Kreiselkompass starr mit der Erdoberfläche verbunden und liefert dann nach einigen Minuten die Nordrichtung. Die Messung des Rotationsgeschwindigkeitsvektors der Erde ist nur in starrer Verbindung zur Erdoberfläche möglich.

### iv.) Inertiale Messeinheit - IMU

Die relative Orientierung kann auch mit einer inertialen Messeinheit (inertial measurement unit, IMU) innerhalb eines Systems zur Trägheitsnavigation (inertial navigation system, INS) gemessen werden. Um daraus eine absolute, kartenreferenzierte Orientierung zu erhalten, ist zumindest die Initialisierung mit einem Verfahren zur Messung der kartenreferenzierten Orientierung notwendig. Dafür eignet sich die hier beschriebene Lagebestimmung des Beobachtungsgerätes in idealer Weise, da auch in kompakter Bauweise ein hochgenauer Messwert zu einem sehr genau definierten Zeitpunkt erreichbar ist und durch ständige Messungen der absoluten Orientierung das INS neu referenziert und damit die Fehlerakkumulation (Drift) reduziert wird.

### v.) Global Positioning System (GPS) Tracking

Durch mehrere voneinander entfernte GPS Messungen kann der Azimut bestimmt werden, indem von der bekannten Standortposition (GPS Messung) auf einen vorher gemessenen früheren Standort zurückgezielt wird. Dies setzt eine Bewegung während der Messung voraus.

### vi.) Lagebestimmung mittels Referenzpunkten

Ist die Standortposition bekannt (z.B. GPS Messung), so kann aus Richtungsmessungen (jeweils Azimut und Elevation bezogen auf ein beliebig wählbares lokales Koordinatensystem) zu mindestens zwei Referenzpunkten, deren Position (Koordinaten) im Kartenkoordinatensystem bekannt sind, die komplette kartenreferenzierte Orientierung des Gerätes bestimmt werden (Kartenkoordinatensystem: Azimut bezüglich geographisch Nord, Elevation und Rollwinkel bezüglich Erdschwerefeld). Solche Richtungsmessungen bezogen auf ein lokales Koordinatensystem können durch Anzielen der Referenzpunkte mit einer definierten Achse des Gerätes (z.B. Zielachse eines Theodoliten) oder einfacher durch Abbildung der Referenzpunkte durch eine Kamera und Positionsauswertung im Kamerabild erfolgen (lokales Koordinatensystem = Kamerakoordinatensystem).

Die Bestimmung der Orientierung über die zwei Referenzpunkte setzt voraus, dass die beiden Punkte nicht zusammen mit dem Standort auf einer Geraden liegen. Solche Referenzpunkte müssen leicht wiedererkennbar, vorhanden und vom Standort aus für das Verfahren sichtbar sein.

### vii.) Astronomische Navigation und Lagebestimmung

Aus dem Stand der Technik sind auch Lagebestimmungsverfahren unter Verwendung von Richtungsmessungen auf Himmelskörper bekannt.

Zu einem präzise bekannten (UTC) Zeitpunkt und Datum ist die Position der Himmelsobjekte relativ zur Erde berechenbar. Wird die Standortposition des Beobachters vorgegeben, kann die kartenreferenzierte Richtung zu den Himmelskörpern berechnet werden und diese können als (weit entfernte) Referenzpunkte verwendet werden.

### viii.) Lagebestimmung unter Verwendung eines DTM

Ein digitales Terrainmodel (DTM) ist eine digitale Version einer topographischen Karte, welche den Höhenverlauf der Geländeoberfläche in Form von dreidimensionaler Karteninformation enthält. Der Begriff DTM wird hier zusammenfassend auch für sogenannte Digital Surface Model DSM verwendet, welche auch Höheninformation von Gebäuden und/oder Bewuchs (Wald) enthalten. Schliesslich gibt es auch die Möglichkeit die dreidimensionale Terrainstruktur als triangulated irregular network (TIN) oder mithilfe ähnlicher Geoinformationssystem (GIS) basierten Formate darzustellen. Auch diese Varianten der Terrainrepräsentation sollen hier mit dem gemeinsamen Begriff DTM abgehandelt werden.

Die DTM Information kann zur Lagebestimmung im Gelände verwendet werden. Im Folgenden werden entsprechende Dokumente aus der Patentliteratur worin der Nutzen eines DTM's zur Lagebestimmung offenbart ist zusammengefasst.

WO2011058507 beschreibt ein System und eine Methode zur Bestimmung der Standortposition und berechnet in einer Variante auch die Orientierung und somit die räumliche Lage. Vom unbekannten Standort aus werden Polarpunktaufnahmen zu prominenten Punkten des Geländes (z.B. Berggipfel) gemacht. Der gemessene Höhenunterschied der Punkte und der gemessene Abstand der Punkte werden verwendet, um diese Referenzpunkte auf der Karte (DTM) zuzuordnen.

Die DE 102016101455 beschreibt eine Vorrichtung zur Positionsbestimmung mittels Kamerabildauswertung und Vergleich mit DTM gestützt auf das Vorhandensein eindeutig zuordenbarer Objekte.

In US 7451059 B2 ist ein System und Verfahren zur verbesserten Bestimmung einer grob mittels passiver Zielpunktdatenerfassung (passive target data acquisitoin system, PTAS) bestimmten Azimut-Orientierung unter Verwendung eines Geländemodells beschrieben. Das System und Verfahren basiert auf dem Vorhandensein von vorbekannten Referenzzielpunkten oder auf einer manuellen Zuordnung von angezielten Positionen zu einer Position auf dem DTM.

EP 1599771 beschreibt unter anderem ein passives Verfahren (ohne LRF) zur Azimut Verbesserung, d.h. ein anfangs stark fehlerbehafteter Azimut wird unter Verwendung des DTM korrigiert. Die geschieht anhand eines vom Benutzer ausgewählten Zielpunkts (specific sighted target).

Das System berechnet aus dem eingangs vorliegenden Azimut kombiniert mit Elevation und Standortposition eine Schätzung für die Position des Zielpunkts auf dem DTM. Die Position wird dem Benutzer angezeigt und durch manuelle Eingabe korrigiert. Daraus wird der korrigierte Azimut berechnet.

In ähnlicher Weise erreicht US 6181302 eine Korrektur der beiden anderen Euler-Winkel (Inklination und Rollwinkel) ebenfalls durch manuelle Korrektur des Benutzers.

Des Weiteren umfasst der Stand der Technik Verfahren zur Navigation von Raumlandefähren der Raumfahrt, welche auf der räumlichen Lagebestimmung der Raumlandefähre basieren. Beispielsweise werden in EP2916106 Kamerabilder der angesteuerten Planetenoberfläche sowie ein DTM zur Lagebestimmung verwendet. Es erfolgt eine Zuordnung von einzelnen Geländemerkmalen des DTM (z.B. Mitte Mondkrater) zu Positionen im Bild. Aus den so gewonnenen Punktkorrespondenzen wird die räumliche Lage der Kamera und damit der Landefähre bestimmt. Die aufgenommenen Bildkontraste werden durch die Wechselwirkung der Beleuchtung, welche durch den Sonnenstand beeinflusst wird, mit der Planetenoberfläche (davon DTM Modell) bestimmt, wobei diese Wechselwirkungen bei dem Verfahren berücksichtigt werden.

Beispielsweise wird in WO 2015160287 die Horizontlinie im Kamerabild bestimmt und basierend darauf verbesserte Werte für Elevation und Rollwinkel ermittelt.

Ebenfalls mit der Auswertung der Horizontlinie (Maximal elevation angles, physical skyline, visible horizon) arbeitet US 9383207**.** Bei diesem Verfahren wird neben der Benutzerposition auch der Azimutwinkel bestimmt.

Die Veröffentlichung "Camera geolocation from mountain images", von Yi Chen et al., Proceedings of the 18th International Conference on Information Fusion, IEEE, 2013, beschreibt ein Verfahren zur Bestimmung der Kameralage durch den Vergleich von aus dem DTM simulierten Terrainübergängen (ridge, skyline) mit zweidimensionalen Kurven, welche aus dem Kamerabild extrahiert werden. Bevor ein Vergleich mit der simulierten DTM Abbildung möglich ist, muss die Bildauswertung dazu in einem "tracing algorithm" die Kurven aus dem Kamerabild extrahieren.

Ein ähnliches Verfahren für urbane Umgebung beschreibt US2017/0301104A1**.** Wieder erfolgt die Bildauswertung mit einem "tracing algorithm", weil der Vergleich vom Bild zum DTM auf dem Vergleich von vorher extrahierten zweidimensionalen Kurven beruht.

Die vorliegende Erfindung beschreibt ein Beobachtungsgerät mit einer Lagebestimmungsfunktionalität zur hochgenauen Bestimmung der räumlichen Lage, d.h. der Position und Orientierung, des Beobachtungsgerätes unter Verwendung einer Kamera mit Objektiv, eines digitalen Terrainmodells (DTM) und einer entsprechenden Sensorik in Verbindung mit einer Auswerteeinheit.

Es ist Aufgabe der Erfindung, dass die Bestimmung der kartenreferenzierten Lage des Beobachtungsgerätes in Kurzzeit (wenige Sekunden) vollautomatisch, rein passiv (keine Emission von elektromagnetischer Strahlung), hochpräzise und zu einem definierten Zeitpunkt erfolgt.

Eine weitere Aufgabe der Erfindung besteht darin, dass dabei die Lagebestimmung unbeeinflusst von Störfeldern elektrischer Ströme oder Vibrationen, Bewegungen und Beschleunigungen bleibt.

Eine weitere Aufgabe der Erfindung ist es eine Lagebestimmung zu ermöglichen, welche nicht angewiesen ist auf die Sichtbarkeit von vordefinierten Referenzpunkten und unbeeinflusst bleibt von ungünstigen Witterungsverhältnissen wie beispielsweise bedecktem Himmel oder reduzierter Sichtweite.

Eine weitere Aufgabe der Erfindung besteht darin, dass die kartenreferenzierte Lagebestimmung des Beobachtungsgerätes möglichst unabhängig vom Umfeld (auch kaum oder gar nicht besiedelt) erfolgen kann und auch für eine terrestrische Lagebestimmung (beispielsweise UAV in geringer Flughöhe) geeignet ist.

Diese Aufgaben werden durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Das erfindungsgemässe Beobachtungsgerät, welches insbesondere als Fernglas ausgebildet ist, beispielsweise als Binokular oder Monokular weist eine vollautomatische kartenreferenzierte Lagebestimmungsfunktionalität auf und hat eine Kamera (8) mit einem Objektiv (2) und einem Kamerasensor (3) zur Aufnahme eines Bildes eines die Kamera umgebenden Geländes als Kamerabild. Des Weiteren weist das erfindungsgemässe Beobachtungsgerät einen Datenspeicher zur Speicherung von Programmdaten und einem digitalen Terrainmodell (DTM) (4) auf, wobei das DTM zumindest Teile des umgebenden Geländes als räumliche, digital prozessierbare Information enthält. Besagtes Beobachtungsgerät hat ausserdem eine Sensorik (5) zur groben initialen Bestimmung einer räumlichen Lage des Beobachtungsgerätes wobei die räumliche Lage eine Positionsinformation und/oder eine Orientierungsinformation aufweist, eine Auswerteeinheit (6) mit Datenverarbeitungs-, Bilddatenverabeitungs- und Sensorsignalauswertungsfunktionalität und ein Display (7). Dabei ist die Sensorsignalauswertungsfunktionalität der Auswerteeinheit des erfindungsgemässen Beobachtungsgerätes dazu konfiguriert, um mittels Auswertung von Signalen der Sensorik eine grobe initiale Bestimmung der räumlichen Lage des Beobachtungsgerätes durchzuführen. Die

Datenverarbeitungsfunktionalität der Auswerteeinheit ist dazu konfiguriert, um aus der gespeicherten räumlichen Information des DTM simulierte Bildpositionen von von der Kamera (8), in Bezug auf die initial grob bestimmte räumliche Lage des Beobachtungsgerätes, potenziell erfassbaren Terrainübergängen zu ermitteln. Die Bilddatenverarbeitungsfunktionalität der Auswerteeinheit ist dazu konfiguriert, dass an den ermittelten simulierten Bildpositionen das aufgenommene Kamerabild auf ein Vorhandensein einer Abbildung eines Terrainübergangs automatisch geprüft wird, wobei die initial grob bestimmte räumliche Lage des Beobachtungsgerätes und entsprechend die ermittelten simulierten Bildpositionen von potenziell erfassbaren Terrainübergängen innerhalb definierter Toleranzen, insbesondere basierend auf einem vorgängig ermittelten Ergebnis der automatischen Prüfung, virtuell variiert werden. Des Weiteren ist die Auswerteeinheit dazu konfiguriert die automatische Prüfung im Rahmen einer Optimierung, insbesondere unter Variierung der jeweiligen virtuellen räumlichen Lage und der simulierten Bildpositionen, zu wiederholen und als Optimierungsergebnis basierend darauf die räumliche Lage des Beobachtungsgerätes festzulegen/ zu bestimmen.

In einer möglichen alternativen Ausführungsform kann sich mindestens eine der Einheiten Datenspeicher, Auswerteeinheit, Display nicht beim oder am Beobachtungsgerät befinden sondern davon abgesetzt sein und über eine entsprechende Kabelverbindung oder kabellose Verbindung untereinander und mit dem Beobachtungsgerät zwecks Datenübermittlung verbunden sein. Dabei befindet sich am Beobachtungsgerät selber lediglich eine Datenkommunikationsschnittstelle. Diese findet sich dann entsprechend auch an den abgesetzten Einheiten und dient dem Senden und Empfangen entsprechender Daten.

Die Lagebestimmung erfolgt in jedem Fall zu einem definierten Zeitpunkt an dem ein Bild des umgebenden Terrains/Geländes von der Kamera aufgenommen wird. Möglichst gleichzeitig zur Bildaufnahme wird dann durch eine Sensorik eine grobe initiale Bestimmung der räumlichen Lage des Beobachtungsgerätes durchgeführt, beispielsweise mittels global positioning system (GPS) und digital magnetic compass (DMC) Sensoren. Einerseits wird dabei die Standortposition/Koordinateninformation des Beobachtungsgerätes ermittelt, beispielsweise mittels GPS Sensor. Andererseits wird eine grobe initiale (potentiell stark fehlerbehaftete) Bestimmung der Orientierung des Beobachtungsgerätes durch eines der eingangs beschriebenen Verfahren durchgeführt, beispielsweise mittels DMC Sensor.

Ein DTM, also eine digitale topographische Karte, mit dreidimensionaler Repräsentation der Terrainfläche/des Geländes der Umgebung des Standortes ist für das Verfahren lesbar auf dem Datenspeicher vorhanden. Hieraus wird unter Verwendung der durch die Sensorik grob initial bestimmten räumlichen Lage des Beobachtungsgerätes und der Kamerakalibrierung sowohl die Abbildung von Übergängen von Terrain zum Himmel (Horizontlinie oder auch nur Teile davon) als auch von Übergängen bei Überlappung von Terrainstrukturen mit stark unterschiedlichem Abstand (z.B. Hügel vor Bergen) berechnet und die entsprechenden simulierten Bildpositionen aller Terrainübergänge ermittelt und gespeichert.

Die vorgängig zur vorgegebenen räumlichen Lage des Beobachtungsgerätes ermittelten, simulierten Bildpositionen von Terrainübergängen werden verwendet, um entsprechende Bildpositionen des aufgenommenen Kamerabildes auf das Vorhandensein solcher Übergänge zu prüfen.

Im Rahmen einer numerischen Optimierung wird die räumliche Lage des Beobachtungsgerätes virtuell so verändert/variiert, dass eine optimale Übereinstimmung zwischen entsprechend simulierten Terrainübergängen und im aufgenommenen Kamerabild ermittelten Terrainübergängen erreicht wird. Die virtuelle Veränderung/Variation der räumlichen Lage des Beobachtungsgerätes kann beispielsweise einem Versatz der Position und/oder einer Winkelanpassung eines, mehrerer oder aller Winkel, welche die Orientierung des Beobachtungsgerätes definieren (z.B. Euler-Winkel: Azimut, Elevations- und Rollwinkel), entsprechen. Dabei wird die Grösse beispielsweise des Versatzes oder der Winkelveränderung basierend auf Toleranzwerten erfolgen. Diese definierten Toleranzwerte können vordefiniert sein, dynamisch während der Prüfung, beispielsweise basierend auf einem Ergebnis eines vorgängigen Schrittes der Prüfung, festgelegt und angepasst werden, oder von einem Benutzer festgelegt/bestimmt sein.

Die so gefundene räumliche Lage des Beobachtungsgerätes, die sämtliche erkennbaren und ermittelten Terrainübergänge des DTM optimal reproduziert, stellt das Ergebnis der Optimierung der räumlichen Lage des Beobachtungsgerätes dar.

In einer weiteren Ausführungsform berücksichtigt die Auswerteeinheit bei der automatischen Prüfung des aufgenommenen Kamerabildes auf das Vorhandensein einer Abbildung eines Terrainübergangs den Abstand des jeweiligen Terrainübergangs zur Kamera mit.

Gemäss einer weiteren Ausführungsform des Beobachtungsgerätes werden die jeweils ermittelten simulierten Bildpositionen dem aufgenommenen Kamerabild überlagert auf dem Display (7) angezeigt, insbesondere wobei ein Verlauf der automatischen Prüfung visuell dargestellt wird.

In einer vorteilhaften Ausführungsform weist das Beobachtungsgerät Eingabemittel auf, welche es einem Benutzer ermöglichen basierend auf den auf dem Display angezeigten, dem Kamerabild überlagerten simulierten Bildpositionen die automatische Prüfung mittels der Eingabemittel abbrechen, und/oder wiederholen zu können. Gegebenenfalls können weitere Arten der Einflussnahme auf die Prüfung, beispielsweise pausieren, schrittweises vor und zurück navigieren zwischen aufeinanderfolgenden Schritten der Prüfung usw. mittels Betätigung der Eingabemittel zur Verfügung gestellt werden.

In einer alternativen Ausführungsform können sich die Eingabemittel auch an einer vom Beobachtungsgerät abgesetzten Einheit, z.B. am Datenspeicher, an der Auswerteeinheit oder am Display befinden.

In einer weiteren Ausführungsform des Beobachtungsgerätes kann der Benutzer die automatische Prüfung mittels der Eingabemittel durch ein manuelles Anpassen der definierten Toleranzwerte verändern, um die räumliche Lage des Beobachtungsgerätes neu zu bestimmen/festzulegen.

Gemäss einer vorteilhaften Ausführungsform kann die mittels der Auswerteeinheit erfolgende grobe initiale Bestimmung der räumlichen Lage des Beobachtungsgerätes durch den Benutzer mittels der Eingabemittel angepasst werden, bevor die automatische Prüfung startet. Beispielsweise erfolgt die Anpassung der initial grob bestimmten räumlichen Lage des Beobachtungsgerätes basierend auf der dem aufgenommenen Kamerabild überlagerten Darstellung der ermittelten simulierten Bildpositionen wodurch die initial grob bestimmte Lage manuell bestimmt wird.

Die zur automatischen Prüfung notwendige Bildinformation des aufgenommenen Kamerabildes kann zu einem Klassifikatorbild verarbeitet werden, bei dem für jeden Pixel ein Kennwert der Wahrscheinlichkeit berechnet wird, dass der Pixel die Abbildung eines Terrainübergangs enthält. Die vorgängig zur vorgegebenen räumlichen Lage des Beobachtungsgerätes berechneten simulierten Bildpositionen der Terrainübergänge werden dann verwendet, um entsprechende Bildpositionen im Klassifikatorbild auf das Vorhandensein solcher Übergänge zu prüfen.

Daher ist in einer weiteren Ausführungsform des Beobachtungsgerätes die Auswerteeinheit dazu ausgelegt, um aus dem aufgenommenen Kamerabild ein Klassifikatorbild zu erstellen, wobei im Klassifikatorbild aufgenommenen Bildpositionen Kennwerte, entsprechend der Wahrscheinlichkeit des Vorhandenseins einer Abbildung eines Terrainübergangs an besagter aufgenommener Bildposition, zugeordnet werden und die entsprechenden Kennwerte visuell als entsprechende Helligkeitswerte dargestellt werden und die virtuelle Variation der räumlichen Lage des Beobachtungsgerätes und entsprechend der ermittelten simulierten Bildpositionen von potenziell erfassbaren Terrainübergängen basierend auf einer Übereinstimmungsprüfung des Klassifikatorbildes mit den ermittelten simulierten Bildpositionen erfolgt.

Gemäss einer weiteren Ausführungsform weist der Datenspeicher das DTM als digital prozessierbare Information in Form von Punktinformationen auf, wobei besagte Punktinformationen als x,y,z Koordinaten, oder Punktverbindungsinformationen oder Intensitätsinformationen oder Farbinformationen oder als beliebige Kombination davon vorliegen.

Des Weiteren kann die digital prozessierbare Information-Punkt- bzw. Flächenattribute aufweisen. Beispiele für solche Repräsentationen des Terrains sind Dreiecksnetze, Polygonnetze und nicht-uniforme rationale B-Splines (NURBS).

Gemäss einer weiteren Ausführungsform weist der Datenspeicher das DTM als digital prozessierbare Information in Form von Höhendaten in einem Rasterdatenformat gespeichert auf.

In einer weiteren Ausführungsform weist die Sensorik des Beobachtungsgerätes mindestens einen Global Positioning System (GPS) Sensor und/oder mindestens einen digitalen magnetischen Kompass (DMC) zur initialen groben Bestimmung der räumlichen Lage des Beobachtungsgerätes auf.

In einer vorteilhaften Ausführungsform des Beobachtungsgerätes hat dieses ein staub- und/oder stoss- und/oder spritzwassergeschütztes Gehäuse.

In einer weiteren vorteilhaften Ausführungsform hat das Beobachtungsgerät ausserdem einen Datentransceiver zum drahtlosen Empfangen und Senden von DTM Daten, wobei empfangene DTM Daten mittels der Auswerteeinheit im Datenspeicher gespeichert werden und DTM Daten zum Senden mittels der Auswerteeinheit vom Datenspeicher abgerufen und zum Senden bereitgestellt werden.

Gemäss einer alternativen Ausführungsform des Beobachtungsgerätes werden die ermittelten simulierten Bildpositionen einer direkten Sicht durch ein Fernrohr des Beobachtungsgerätes überlagert und es wird diese direkte Sicht benutzt zur Prüfung auf das Vorhandensein eines Terrainübergangs an den berechneten Bildpositionen. Dabei wird beispielsweise die Variation/Veränderung der räumlichen Lage des Beobachtungsgerätes nicht virtuell erfolgen, sondern durch ein entsprechendes reales Versetzen bzw. Verschwenken des Beobachtungsgerätes.

In einer weiteren, alternativen Ausführungsform des Beobachtungsgerätes werden simulierte Abbildungen von Terrainübergängen, insbesondere basierend auf einem ermittelten Klassifikatorbild oder den berechneten Bildpositionen, der direkten Sicht durch ein Fernrohr des Beobachtungsgerätes überlagert und diese direkte, überlagerte Sicht wird zur Prüfung auf das Vorhandensein eines Terrainübergangs an den berechneten Bildpositionen benutzt.

In einem vollautomatischen Verfahren, basierend auf der Auswertung eines Kamerabildes kann auf diese Weise ein Benutzer, das Ergebnis der automatischen Lagebestimmung beurteilen.

In einer weiteren vorteilhaften Ausführungsform des Beobachtungsgerätes weist dieses ausserdem eine Befestigungsvorrichtung auf und ist über besagte Befestigungsvorrichtung fest mit einem Objekt insbesondere einem Helm, einem Tragegurt, einem Stativ, einem Fahrzeug, einem Flugobjekt verbunden wobei nach einer Referenzierung einer räumlichen Lage des Objekts mit einer räumlichen Lage des Beobachtungsgerätes die räumliche Lage des Objekts basierend auf der festgelegten/bestimmten räumlichen Lage des Beobachtungsgerätes festgelegt/bestimmt wird.

Das erfindungsgemässe Beobachtungsgerät mit Lagebestimmungsfunktionalität wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig.1 beispielhaft die Komponenten, welche die Lagebestimmungsfunktionalität des Beobachtungsgerätes bereitstellen(1): eine Kamera(8), bestehend aus
   einem Objektiv (2) und einem Bildsensor (3);
   ein Datenspeicher zur Speicherung von Programmdaten und DTM (4); eine Sensorik (5); eine Auswerteeinheit (6) sowie ein Display (7),
Fig.2 ein DTM hier als Beispiel im Format gerasterter Höhendaten,
Fig.3a eine Skizze der Berechnung simulierter Bildpositionen von Terrainübergängen,
Fig.3b ein Beispiel von simulierten Bildpositionen (schwarze Linien), die dem Kamerabild überlagert wurden,
Fig.4 eine Skizze der Berechnung des Einflusses der Erdkrümmung und der atmosphärischen Refraktion auf die Berechnung simulierter Bildpositionen,
Fig.5a beispielhaft das von der Kamera aufgenommene Bild (Kamerabild) für die Auswertung,
Fig.5b die basierend auf der initial groben Lagemessung und dem DTM simulierten Bildpositionen von Terrainübergängen,
Fig.5c ein aus dem Kamerabild berechnetes/ermitteltes Klassifikatorbild,
Fig.5d das Ergebnis einer Optimierung, welche zu einer präziseren Lagebestimmung führt ausgehend von aus dem DTM simulierten Bildpositionen von Terrainübergängen,
Fig.6 ein Beispiel für im Kamerabild abgebildete terrainfremde Strukturen (Bäume) und das trotzdem korrekte Ergebnis der Optimierung,
Fig.7 das Ergebnis einer Lagebestimmung ausgehend von einem Kamerabild mit wetterbedingter, reduzierter Sichtweite.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

Die Lagebestimmungsfunktionalität des Beobachtungsgerätes verbessert eine mit einem eingangs beschriebenen herkömmlichen Verfahren bestimmte grobe (potentiell stark fehlerbehaftete) Orientierung in allen drei Euler-Winkeln und Position und liefert als Ergebnis eine hochgenaue räumliche Lageinformation.

### Aufbau des Geräts

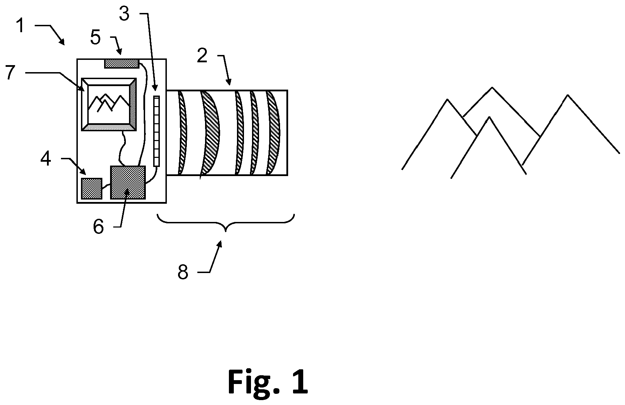

Fig.1 zeigt eine Skizze von Komponenten (1), welche die Lagebestimmungsfunktionalität des Beobachtungsgerätes bereitstellen: Eine (digitale) Kamera (8), um einen Teil der Umgebung/des Geländes des Standortes abzubilden. Die Kamera hat einen Bildsensor (3), auf dem über ein Objektiv (2) eine Abbildung eines Teils der Umgebung/des Geländes erfolgt, deren Bildinformation dadurch in digital verarbeitbarer Form zugänglich ist. Die Kamera kann auch beispielsweise als Wärmebildkamera ausgeführt sein, um Messungen in der Nacht und/oder bei völliger Dunkelheit zu ermöglichen. Der verwendete Bildsensor (3) sollte möglichst hochauflösend sein, um eine hohe Messgenauigkeit des lokalen Rollwinkels (Rotation der Kamera um die Kamerahauptachse) zu gewährleisten.

Vorteilhaft wird das Objektiv (2) als Teleobjektiv ausgeführt, um hohe Messgenauigkeiten beim lokalen Azimut (Rotation um die Bildsensor-Spaltenrichtung) und lokaler Elevation (Rotation um die Bildsensor-Zeilenrichtung) zu erreichen.

Die Bildaufnahme erfolgt in der Regel für kurze Belichtungszeiten. Möglichst gleichzeitig dazu wird von einer Sensorik (5) die Standortposition bestimmt und eine grobe initiale Bestimmung der Orientierung mittels einem der eingangs beschriebenen Verfahren durchgeführt.

Die Aufnahme des Kamerabildes und der Sensorsignale (Standortposition und Orientierung) erfolgt sehr schnell, mit einem typischen Zeitbedarf von deutlich unter einer Sekunde, danach folgt eine Datenverarbeitung die einige Sekunden dauern kann. Während der Verarbeitungszeit kann das System beliebig bewegt werden, ohne dass der Messwert beeinflusst wird. Dies hat zum Beispiel Vorteile bei Anwendungen für Artilleriebeobachter, weil sich der Beobachter nach der Aufnahme des Kamerabildes und der Sensorsignale der Sensorik sofort wieder in geschützte Deckung begeben kann.

Wie man an diesem Anwendungsbeispiel leicht sieht, kann der auszuwertende Bildausschnitt des Kamerabildes nicht in einem langwierigen Prozess vom Benutzer ausgewählt oder mehrfach verändert werden.

Idealerweise funktioniert die Lagebestimmung mit den meisten der möglichen Orientierungen der Kamera relativ zum Gelände.

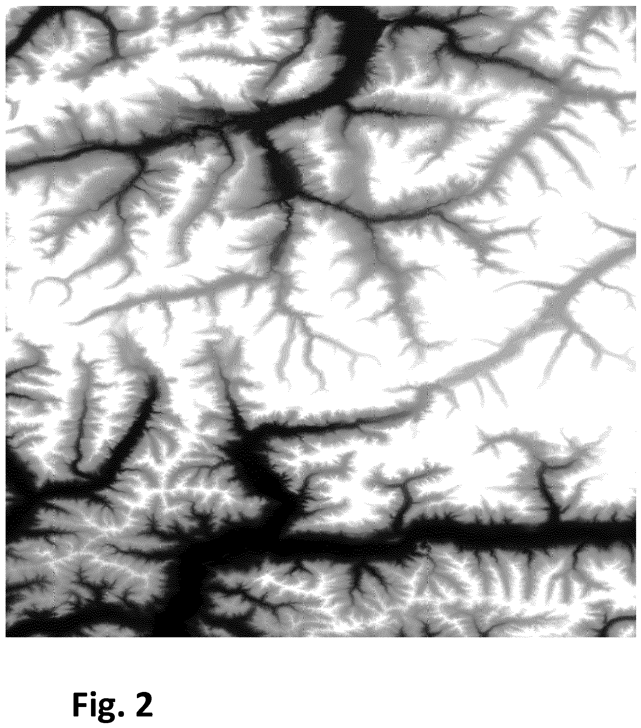

Im Rahmen der Verarbeitung wird ein DTM der Umgebung des Beobachtungsgerätes/der Kamera verwendet. Fig. 2 zeigt ein solches DTM als Beispiel im Format gerasterter Höhendaten. Die als Graustufenbild dargestellte WGS84 Geländehöhe variiert dabei von 200m (schwarz) bis über 1000m (weiss). Das DTM ist eine digitale Version einer topographischen Karte, welche den Höhenverlauf der Geländeoberfläche in Form von dreidimensionaler Karteninformation enthält.

Der Begriff DTM wird hier zusammenfassend auch für andere digitale Beschreibungen der Oberflächen des Terrains, insbesondere auch als Synonym für Digital Surface Model DSM verwendet, welches auch Höheninformation von Gebäuden und/oder Bewuchs (z.B. Wald) enthält. Auch Datenformate, welche beide Informationen kombinieren (oft als Digitales Elevationsmodell oder DEM bezeichnet), werden hier unter dem Synonym DTM zusammengefasst. Zudem existiert die Möglichkeit die dreidimensionale Terrainstruktur als triangulated irregular network (TIN) oder mithilfe ähnlicher GIS Formate darzustellen. Auch solche Datenstrukturen werden hier zusammenfassend mit dem Begriff DTM bezeichnet. Insbesondere gibt es auch die Möglichkeit, statt natürlicher Terrainstrukturen, zusätzlich oder ausschliesslich Oberflächenbeschreibungen künstlicher Strukturen wie Gebäuden, Brücken und Strassen zu verwenden. Auch solche typischerweise als GIS Datenformat gespeicherte Beschreibungen der umliegenden Oberflächen können für das Verfahren verwendet und sollen hier ebenfalls mit dem Begriff DTM bezeichnet werden. Digitale Repräsentationen von Oberflächen haben stets eine limitierte Ortsauflösung, d.h. die Fläche zwischen den vorgegebenen Datenpunkten muss/kann in geeigneter Weise interpoliert/extrapoliert werden. Die Ausführung der DTM Daten als gerasterte Höhen ist in der weiteren Beschreibung nur beispielhaft.

### Berechnung des simulierten Panoramas

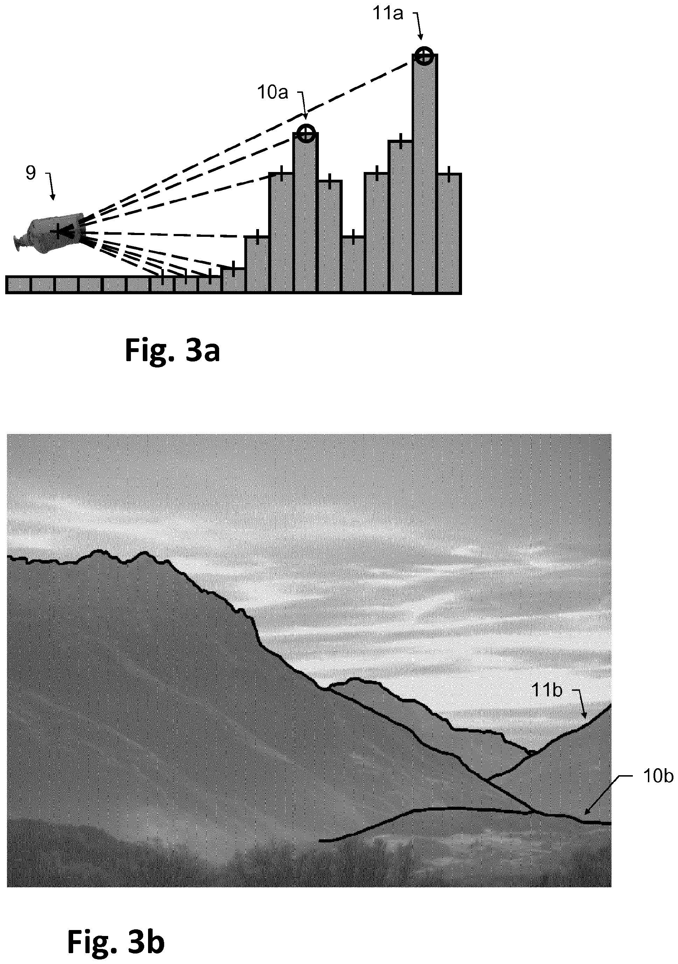

Fig.3a zeigt als Ansicht von der Seite ein DTM als Beispiel in gerasterten Höhendaten. Dabei ist die Erdoberfläche in regelmässige Längengradintervalle und Breitengradintervalle (Säulen) aufgeteilt, die hier von der Seite abgebildet sind. Lokal betrachtet entspricht zum Beispiel eine Aufteilung von jeweils einer Winkelsekunde für Längen- und Breitengrad näherungsweise einer Aufteilung der Erdoberfläche in identische Rechtecke mit jeweils gleichen Horizontal- und jeweils gleichen Vertikalabständen, d.h. einer Repräsentation in Form eines Rasters. Für jedes Rechteck des Rasters ist die Höheninformation referenziert auf ein Bezugssystem gespeichert (also zum Beispiel WGS84 oder EGM96 oder EGM2008).

Die simulierte Standortposition des Beobachtungsgerätes innerhalb des DTM wird durch das Fernglas (9) gekennzeichnet. Von dort aus werden, zu einem vorgegebenen Azimut, Schritte auf dem DTM simuliert und jeweils die DTM-Geländehöhe und der Abstand zum Gerät zu einer Winkelinformation kombiniert (Elevation im lokalen Koordinatensystem des Gerätes). Entlang der untersuchten Azimut Richtung wird die maximale Elevation (11a) zusammen mit lokalen Maxima der Elevation (10a) bestimmt. Die maximale Elevation entspricht einem simulierten Übergang von abgebildetem Terrain zu abgebildetem Himmel, d.h. einem Horizontpunkt. Fig. 3b zeigt das ausgewertete Kamerabild und in (11b) einen Punkt der Horizontlinie. Die lokalen Maxima (10a) der Elevation entsprechen in Fig. 3b Übergängen (10b), wo Terrain im Vordergrund mit Terrain im Hintergrund überlappt (z.B. Hügel vor Berg).

Eine entsprechende Simulation wird für viele der Azimut Richtungen des Kameragesichtsfelds durchgeführt. Die (vielen) Punkte sind in Fig. 3b schwarz gezeichnet und dem Kamerabild überlagert. Dies führt zu linienhaften Strukturen: der Horizontlinie und den Terrain-Terrain Übergängen.

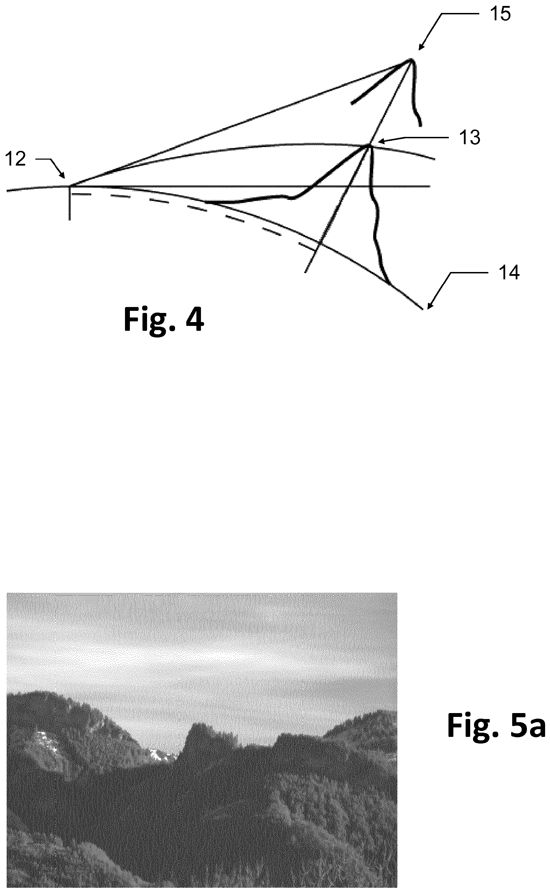

Die Berechnung wurde hier vereinfacht dargestellt. Wie in Fig. 4 zu erkennen, erscheint für grössere Distanzen die von einem Standort (12) aus bestimmte, scheinbare Höhe eines Geländepunktes (13) durch den Einfluss der Erdkrümmung (14) reduziert. Zudem führt atmosphärische Refraktion zu einer Krümmung der Abbildungsstrahlen (von (12) nach (13)) wodurch die scheinbare Höhe (15) insgesamt höher ist als die tatsächlich vorhandene Höhe (13). Dies wird bei der Ermittlung der simulierten Bildpositionen entsprechend korrigiert. Für die atmosphärische Refraktion kann ein meteorologisch angepasstes Modell verwendet werden. Oft ist ein einfacheres Modell wie der Refraktionskoeffizient nach Gauss ausreichend.

Verwendet man die eingangs grob gemessene räumliche Lage des Beobachtungsgerätes so kann aus den vorher aus dem DTM berechneten Richtungen zu im Bild potenziell sichtbaren Terrainübergängen (unter Verwendung einer Kamerakalibrierung) deren Abbildung ins Kamerabild simuliert werden, d.h. man erhält eine Reihe von 2d Bildkoordinaten für Abbildungsorte (simulierte Bildpositionen) potenziell erkennbarer Terrainübergänge. Zu jeder dieser Bildpositionen ist der Abstand des zugrundeliegenden Terrainübergangs von der Kamera aus der vorher erfolgten Simulation (Elevation Berechnung) für die weitere Auswertung verfügbar. Für simulierte Übergänge aus Überlappung von Terrainstrukturen unterschiedlichen Abstands wird dafür der minimale der beiden am Übergang beteiligten Abstände verwendet.

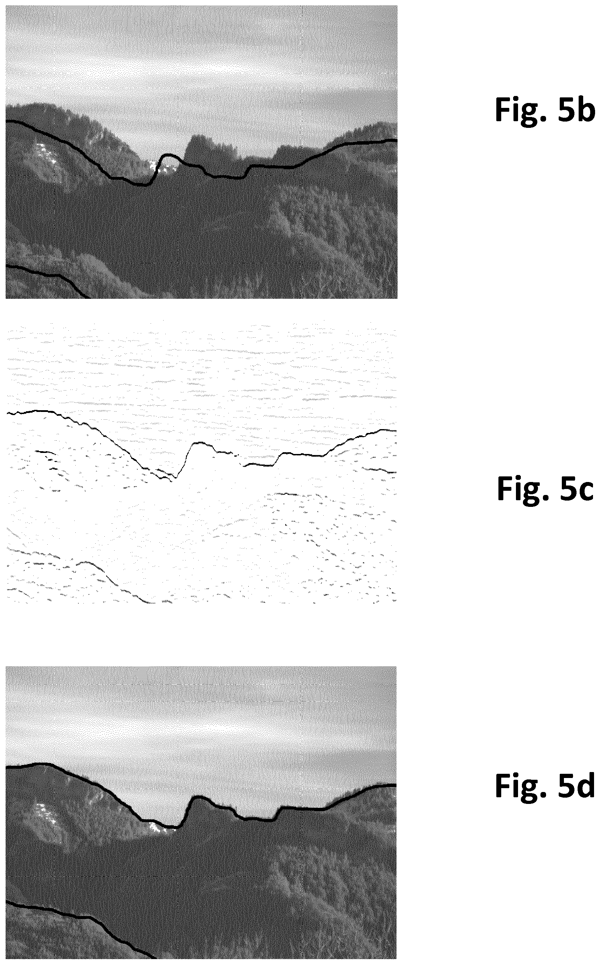

Fig.5a zeigt ein aufgenommenes Kamerabild. In Fig. 5b sind die schwarz gezeichneten simulierten Bildpositionen dem Kamerabild überlagert. Die Fehler der eingangs von der Sensorik grob bestimmten räumlichen Lage führen zu offensichtlichen Abweichungen der simulierten Bildpositionen von den tatsächlich abgebildeten Terrainübergängen im Bild.

### Verarbeitung des Kamerabildes zu einem Klassifikatorbild

Das aufgenommene Kamerabild wird prozessiert. Ziel ist es, anhand des Bildinhaltes für jeden Pixel abzuschätzen, wie wahrscheinlich darauf ein Terrainübergang abgebildet ist. Fig. 5c zeigt beispielhaft das Ergebnis dieser Verarbeitung, das Klassifikatorbild, bei dem die Helligkeitswerte der Pixel durch den Wahrscheinlichkeitswert ersetzt wurden (Hohe Wahrscheinlichkeiten sind hier dunkel dargestellt).

Die Berechnung des Klassifikatorbildes kann auch vereinfacht erfolgen, zum Beispiel durch die Berechnung eines Canny Edge Filters. Der Wert der Pixelklassifikation muss nicht exakt der Wahrscheinlichkeit entsprechen - es kann ausreichend sein, eine Abschätzung eines zur Wahrscheinlichkeit monotonen Wertes zu verwenden.

Bei ungünstigen Beleuchtungen und/oder Wetterverhältnissen und/oder Terrainstrukturen und/oder

Terrainoberflächentexturen und/oder DTM fremden Objekten im Bild kommt es für manche Pixel zu fehlerhaften Klassifikationen, wie auch in Bild 5c zu erkennen ist.

### Berechnung der Zielfunktion

Zu jeder der berechneten, simulierten Bildpositionen wird innerhalb einer Umgebung der Bildposition (Suchbereich) im Klassifikatorbild geprüft, ob dort ein Terrainübergang gefunden (klassifiziert) wurde. Für die Wahl der Grösse des Suchbereiches wird der vorher zur Bildposition berechnete Abstand zur Kamera verwendet. Für kürzere Abstände des abgebildeten Terrains wird ein grösserer Suchbereich verwendet. So kann beispielsweise die Verschiebung eines Terrainübergangs im Bild durch Bewaldung (zum Beispiel maximale berücksichtigte Höhe der Bäume 20m) kompensiert werden, indem die Suche von der aus dem DTM berechneten Bildposition (Waldboden) bis auf Höhe der Baumgipfel ausgedehnt wird.

Die Vorgehensweise kann verbessert werden, wenn zusätzlich zum DTM beispielsweise eine Information über die lokale Bewaldung oder deren Höhe vorliegt. Ausserdem kann auf den abstandsabhängigen Suchbereich verzichtet werden, wenn die Bewaldung/Bewuchs schon in der Höheninformation des DTM berücksichtigt wurde.

Für eine ausgewertete simulierte Bildposition wird innerhalb ihres Suchbereichs der Maximalwert der Klassifikation bestimmt, d.h. die beste Übereinstimmung zum Merkmal Terrainübergang.

Die so gefundenen maximalen Klassifikationswerte werden für alle simulierten Bildpositionen von Terrainübergängen akkumuliert (zum Beispiel: alle addiert) und so ein Wert errechnet, der als Zielfunktion einer numerischen Optimierung der (vorher für die Simulation) vorgegebenen Kameraorientierung verwendet wird.

Algorithmen für solche numerischen Optimierungsaufgaben sind Stand der Technik und beispielsweise in "Numerical Recipes in C. The Art of Scientific Computing", Second Edition. William H. Press et al., Cambridge University Press, 1992, beschrieben. Ein Beispiel ist das Nelder-Mead Downhill-Simplex-Verfahren oder auch vollständiges Durchprobieren (dense sampling) mit einer angepassten Dichte oder eine Kombination dieser und/oder anderer Verfahren.

Die initial grob bestimmte räumliche Lage des Beobachtungsgerätes wird vom Optimierungsalgorithmus in geeigneter Weise virtuell variiert und die simulierten Bildpositionen von Terrainübergängen des DTM entsprechend erneut ermittelt. Die Bestimmung des Klassifikatorbildes braucht für das Verfahren (für ein aufgenommenes Kamerabild) nur einmal durchgeführt zu werden. Für die neu berechneten/ermittelten Bildpositionen werden wieder Suchbereiche im Klassifikatorbild abgesucht, jeweils der Maximalwert der Klassifikation bestimmt und diese Maximalwerte für alle Bildpositionen akkumuliert. So ergibt sich für die variierte räumliche Lage des Beobachtungsgerätes ein neuer Zielfunktionswert. Durch Wiederholung dieser Vorgehensweise und den Vergleich der so bestimmten Zielfunktionswerte bestimmt man die räumliche Lage mit der maximalen Zielfunktion, bei welcher die simulierten Bildpositionen der DTM-Terrainübergänge am besten zu Terrainübergangspositionen im Klassifikatorbild passen. Fig. 5d zeigt das Ergebnis der Optimierung.

### Vorteile des Verfahrens und vorteilhafte Varianten

Die Anpassung erfolgt vollautomatisch - es ist keine Interaktion mit einem Benutzer notwendig. Insbesondere muss keine Zuordnung von Landmarks/Referenzpunkten zu Bildpositionen durch den Nutzer durchgeführt werden. Es werden immer alle simulierten Bildpositionen (die innerhalb der Bildgrenzen liegen) von allen potenziell erkennbaren Terrainübergängen (Horizontlinie: Übergang Terrain-Himmel und Übergänge von überlappenden Terrainstrukturen unterschiedlichen Abstands) mit dem Klassifikatorbild verglichen - es wird keine Einschränkung auf einzelne Punkte (Landmarks) benutzt und es werden auch keine vorher bekannten Referenzpunkte verwendet. So ist die Lagebestimmung auch mit sehr einfach strukturierten Terrainverläufen im Bildinhalt möglich.

Ausserdem ist die Lagebestimmungsfunktionalität robust gegenüber einem grossen Anteil an Fehlklassifikationen im Klassifikatorbild, weil einerseits die korrekten Bildpositionen bei korrekter räumlicher Lage durch den Vergleich mit den simulierten Bildpositionen der Terrainübergänge des DTM unterstützt werden und andererseits die meisten Fehlklassifikationen nicht am Vergleich teilnehmen. Dies ist ein wesentlicher Vorteil im Vergleich zu Verfahren, welche ohne Verwendung der Information über die Terrainstruktur versuchen, ausschliesslich aus dem Bild Terrainstrukturen zu extrahieren, wie z.B. in "Camera geolocation from mountain images". Yi Chen et al., Proceedings of the 18th International Conference on Information Fusion, IEEE, 2013, offenbart.

Fehlklassifikationen im Klassifikatorbild treten zum Beispiel auf, wenn terrainfremde Objekte abgebildet werden. Solche Objekte, die nicht in der DTM Information enthalten sind (z.B. Bäume, Fahrzeuge), können im Bild Kontraste erzeugen, die fälschlicherweise als Terrainübergänge klassifiziert werden (Klassifikation falsch positiv). Zudem können terrainfremde Objekte im Nahbereich Teile des Terrains verdecken und die Abbildung von Terrainübergängen verhindern (Klassifikation falsch negativ).

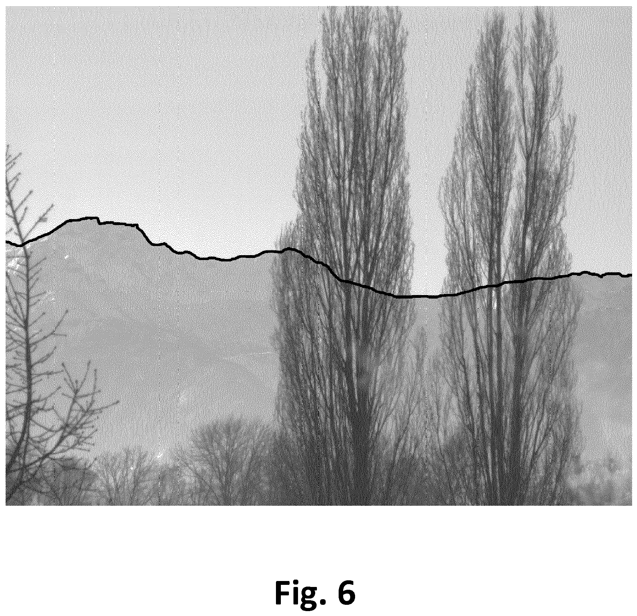

Fig.6 zeigt ein solches Beispiel. Der abgebildete Baum (terrainfremdes Objekt) im Vordergrund verdeckt Teile der Horizontlinie und führt zudem zu Bildkontrasten, die fälschlicherweise als Terrainübergang klassifiziert werden könnten. Trotzdem führt die hier beschriebene Lagebestimmung vollautomatisch zur korrekten Lösung (Fig.6 schwarze Linie), weil der direkte Vergleich des Klassifikatorbildes mit den simulierten Abbildungen von Terrainübergängen einen Grossteil der Fehlklassifikationen herausfiltert. Ausserdem wird bei diesem Vergleich der Abstand der Terrainübergänge von dem Beobachtungsgerät/bzw. der Kamera (aus der Simulation der Abbildung bekannt) verwendet, um eine mögliche Störung der Bildauswertung durch Bewaldung zu korrigieren. Die Lagebestimmung kann auch so ausgeführt werden, dass bevorzugt weiter entfernte Terrainübergänge ausgewertet werden, weil die Störung der Bildauswertung durch eine Bewaldung und die Störung der Verarbeitung durch Fehler in der Standortposition dadurch reduziert werden.

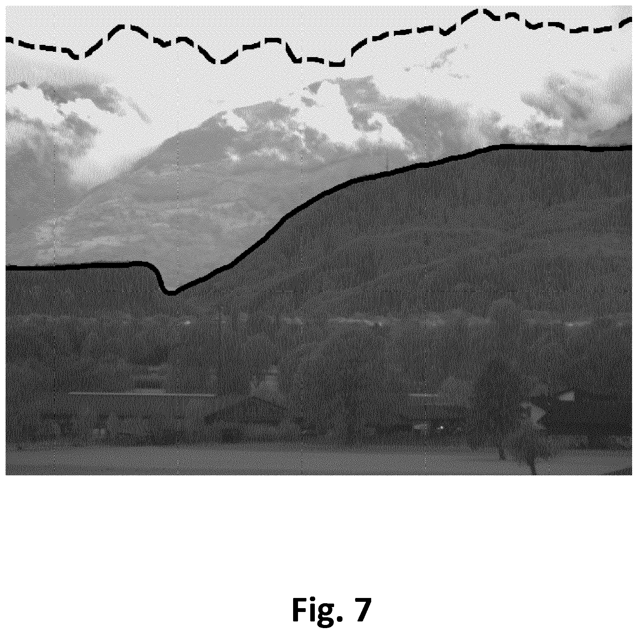

Ein anderes Beispiel für terrainfremde Strukturen sind Wolken die im Bild kontrastreiche Strukturen erzeugen können und von anderen Verfahren der Bildauswertung mit der Horizontlinie verwechselt werden können. Fig.7 ist ein Kamerabild einer solchen Situation. Die Wolken im Hintergrund des Bildes verdecken zudem die Horizontlinie (simulierte Bildpositionen gestrichelt markiert), aber nicht den Terrain-Terrain Übergang im Bildvordergrund. Indem im Rahmen der Lagebestimmung immer alle potenziell sichtbaren Terrainübergänge verglichen werden, konzentriert sich der Vergleich bei schlechten Sichtbedingungen automatisch auf näherliegende Terrainstrukturen.

Auch bei ungünstiger Kombination von Terrainstruktur und Elevationswinkel kann es sein, dass zum Beispiel die Horizontlinie nicht abgebildet wird, sondern nur überlappende Terrainstrukturen unterschiedlichen Abstands. Im Rahmen der hier vorgestellten Lagebestimmung werden nur Stellen ausgewertet, an denen vom DTM ein Übergang Terrain-Himmel oder ein Terrain-Terrain Übergang prognostiziert wurde. Insbesondere werden durch Ausbildung des Klassifikators (Pixelwert des Klassifikatorbildes) lateral konstante Flächentexturen oder konstante Flächenfarben ignoriert. Somit ist die Lagebestimmung robust gegen variabel aussehende Terrainflächen infolge Schneefall oder unterschiedlicher Beleuchtung.

Ist die Terrainstruktur zu einfach (z.B. völlig plan), wird anhand der simulierten Bildpositionen automatisch entschieden, ob statt der vollständigen Lagebestimmung nur die Elevationswinkel und Rollwinkel optimiert und damit verbessert werden.

Zudem wird bei zu wenigen erkennbaren Strukturen im Kamerabild (zum Beispiel bei zu geringer Sichtweite, Nebel) automatisch entschieden ohne Ergebnis der Lagebestimmung, mit Fehlermeldung, abzubrechen.

Die Lagebestimmung kann nur ausgeführt werden, wenn das Terrain und das Terrainmodell gut übereinstimmen, d.h. bei mittelfristig veränderlichen Terrains (z.B. Dünen in der Sahara) muss ein passendes, hinreichend aktuelles DTM verwendet werden.

Die Lagebestimmung wird zur Verbesserung der Orientierung und Position (z.B. GPS Verbesserung) verwendet. Dazu wird die Position und die Orientierung von der oben beschriebenen numerischen Optimierung variiert und verbessert.

Nach erfolgreicher Lagebestimmung, kann das simulierte Bild der Terrainübergänge als Overlay dem aufgenommenen Kamerabild überlagert werden (Vergleiche: Fig.5b und Fig. 5d). Dies erlaubt es dem Benutzer, das Ergebnis zu beurteilen. Eine ungenügend/fehlerhaft angepasste räumliche Lage kann dann auch manuell im Vergleich Overlay/Bild nachkorrigiert werden.

Alternativ dazu kann das beschriebene Overlay auch dem aufgenommenen Kamerabild einer zweiten Kamera (Zusatzkamera) überlagert werden. Dies kann sinnvoll sein, wenn die Zusatzkamera andere Teile des elektromagnetischen Spektrums abbildet (z.B. Wärmebildkamera oder Nachtsichtgerät), welche die visuelle Auswertung durch den Benutzer besser berücksichtigt als die für die Lagebestimmung verwendete Kamera (8). Um eine Vergleichbarkeit des Overlay mit dem Kamerabild der Zusatzkamera zu gewährleisten, ist es günstig, wenn die Kamerazentren von Zusatzkamera und Kamera nicht zu weit voneinander entfernt sind und zudem die Orientierungen der Hauptachsen und die Gesichtsfeldwinkel beider Kameras nur so wenig voneinander abweichen, dass eine rechnerische Anpassung möglich bleibt.

In einer weiteren Variante kann ein Fernrohr des Beobachtungsgerätes mit direkter Sicht auf die Umgebung so ausgeführt sein, dass Anzeigen eines Displays dem Fernrohrbild überlagert wahrgenommen werden. Unter Verwendung dieses Displays kann das simulierte Bild der Terrainübergänge als Overlay dem Fernrohrbild (direkte Sicht) überlagert werden. Vorteilhaft an der Verwendung von direkter Sicht (statt eines Kamerabildes) ist deren oft höhere Auflösung und bessere Farbdarstellung.

Die bestimmte räumliche Lage des Beobachtungsgerätes kann entweder direkt verwendet werden (wenn ein Zielobjekt angezielt wurde) oder als Initialisierung oder Re-Initialisierung eines anderen Lagebestimmungsverfahrens. Insbesondere kann so die Zusammenarbeit mit einem INS System oder einer DMC Messung (Messung: magnetische Deklination) oder als Startwert für ein Videotrackingsystem Vorteile bieten. Alle drei skizzierten Möglichkeiten erlauben das Bestimmen einer räumlichen Lage relativ zu einem allgemeinen Zielobjekt, ohne Rücksicht auf das jeweilige Lagebestimmungsverfahren.

In manchen Fällen kann auf die initiale grobe Bestimmung der räumlichen Lage (z.B. DMC) zu Beginn ganz verzichtet werden. Dazu wird einfach die numerische Optimierung auf sämtliche mögliche Positionen und Orientierungen ausgedehnt und ein Optimierungsverfahren gewählt, welches Fehler durch lokale Optima vermeidet.

Kann eine solche Berücksichtigung aller möglichen Positionen und Orientierungen nicht ausgeführt werden (Rechenzeit, Stabilität gegenüber lokalen Optima, mehrere einander ähnliche Terrainstrukturverläufe), so kann auch ausgehend von einer groben Neigungsmessung (initiale Werte für Elevation und Rollwinkel) die Verbesserung von Elevation und Rollwinkel in einer Umgebung der gemessenen Werte und die Verbesserung des Azimut im gesamten Wertebereich erfolgen.

Schliesslich kann das Verfahren auch ganz ohne die grobe Bestimmung der initialen räumlichen Lage arbeiten, indem eine Vorgabe der initialen räumlichen Lage durch den Benutzer erfolgt. Dies kann direkt erfolgen, aber auch durch schrittweise manuelle Anpassung der Orientierung oder Position und Vergleich von simuliertem Overlay und Umgebungsbild.

Wird die Kamera des Systems als Wärmebildkamera ausgeführt, kann das Verfahren auch in der Nacht und/oder bei absoluter Dunkelheit verwendet werden. Andere Möglichkeiten von Auswertungen während der Nacht bieten Ausführungen der Kamera als Low-Light Kamera und/oder digitaler Restlichtverstärker und/oder Kamera im SWIR Bereich.

## Patentansprüche

1. Beobachtungsgerät, insbesondere Fernglas ausgebildet als Binokular oder Monokular, mit einer vollautomatischen kartenreferenzierten Lagebestimmungsfunktionalität, aufweisend
• eine Kamera (8) mit einem Objektiv (2) und einem Kamerasensor (3) zur Aufnahme eines Bildes eines die Kamera umgebenden Geländes als Kamerabild,
• einen Datenspeicher zur Speicherung von Programmdaten und einem digitalen Terrainmodell (DTM) (4), wobei das DTM zumindest Teile des umgebenden Geländes als räumliche, digital prozessierbare Information enthält,
• eine Sensorik (5) zur groben initialen Bestimmung einer räumlichen Lage des Beobachtungsgerätes wobei die räumliche Lage eine Positionsinformation und/oder eine Orientierungsinformation aufweist,
• eine Auswerteeinheit (6) mit Datenverarbeitungs-, Bilddatenverabeitungs- und Sensorsignalauswertungsfunktionalität, dazu konfiguriert
□ um mittels Auswertung von Signalen der Sensorik (5) eine grobe initiale Bestimmung der räumlichen Lage des Beobachtungsgerätes durchzuführen, und
□ um aus der gespeicherten räumlichen Information des DTM simulierte Bildpositionen von von der Kamera (8), in Bezug auf die initial grob bestimmte räumliche Lage des Beobachtungsgerätes, potenziell erfassbaren Terrainübergängen zu ermitteln, und
• ein Display (7),
**dadurch gekennzeichnet, dass**
die Auswerteeinheit (6) dazu konfiguriert ist,
• dass an den ermittelten simulierten Bildpositionen das aufgenommene Kamerabild auf ein Vorhandensein einer Abbildung eines Terrainübergangs automatisch geprüft wird, wobei die initial grob bestimmte räumliche Lage des Beobachtungsgerätes und entsprechend die ermittelten simulierten Bildpositionen von potenziell erfassbaren Terrainübergängen innerhalb definierter Toleranzen, insbesondere basierend auf einem vorgängig ermittelten Ergebnis der automatischen Prüfung, virtuell variiert werden, und
• dass die automatische Prüfung im Rahmen einer Optimierung, insbesondere unter Variierung der jeweiligen virtuellen räumlichen Lage und der simulierten Bildpositionen, wiederholt wird und als Optimierungsergebnis basierend darauf die räumliche Lage des Beobachtungsgerätes festgelegt/bestimmt wird.

2. Beobachtungsgerät nach Anspruch 1,
**dadurch gekennzeichnet, dass**
die Auswerteeinheit bei der automatischen Prüfung des aufgenommenen Kamerabildes auf das Vorhandensein einer Abbildung eines Terrainübergangs den Abstand des jeweiligen Terrainübergangs zur Kamera mitberücksichtigt.

3. Beobachtungsgerät nach Anspruch 1 oder 2,
**dadurch gekennzeichnet, dass**
die jeweils ermittelten simulierten Bildpositionen dem Kamerabild überlagert auf dem Display (7) angezeigt werden insbesondere wobei ein Verlauf der automatischen Prüfung visuell dargestellt wird.

4. Beobachtungsgerät nach Anspruch 3,
**dadurch gekennzeichnet, dass**
das Beobachtungsgerät Eingabemittel aufweist und ein Benutzer basierend auf den auf dem Display angezeigten, dem Kamerabild überlagerten simulierten Bildpositionen die automatische Prüfung mittels der Eingabemittel abbrechen, und/oder wiederholen kann.

5. Beobachtungsgerät nach Anspruch 4,
**dadurch gekennzeichnet, dass**
der Benutzer die automatische Prüfung mittels der Eingabemittel durch ein manuelles Anpassen der definierten Toleranzwerte verändern kann, um die räumliche Lage des Beobachtungsgerätes neu zu bestimmen/festzulegen.

6. Beobachtungsgerät nach Anspruch 4 bis 5,
**dadurch gekennzeichnet, dass**
die mittels der Auswerteeinheit erfolgende grobe initiale Bestimmung der räumlichen Lage des Beobachtungsgerätes vor der automatischen Prüfung, durch den Benutzer mittels der Eingabemittel angepasst werden kann, insbesondere dahingehend, dass die initial grob bestimmte Lage manuell bestimmt wird basierend auf den dem Kamerabild überlagerten ermittelten simulierten Bildpositionen.

7. Beobachtungsgerät nach einem der Ansprüche 1 bis 6,
**dadurch gekennzeichnet, dass**
die Auswerteeinheit dazu ausgelegt ist, um aus dem aufgenommenen Kamerabild ein Klassifikatorbild zu erstellen, wobei im Klassifikatorbild aufgenommenen Bildpositionen Kennwerte, entsprechend der Wahrscheinlichkeit des Vorhandenseins einer Abbildung eines Terrainübergangs an besagter aufgenommener Bildposition, zugeordnet werden und die entsprechenden Kennwerte visuell als entsprechende Helligkeitswerte dargestellt werden und die virtuelle Variation der räumlichen Lage des Beobachtungsgerätes und entsprechend der ermittelten simulierten Bildpositionen von potenziell erfassbaren Terrainübergängen basierend auf einer Übereinstimmungsprüfung des Klassifikatorbildes mit den ermittelten simulierten Bildpositionen erfolgt.

8. Beobachtungsgerät nach einem der Ansprüche 1 bis 7,
**dadurch gekennzeichnet, dass**
der Datenspeicher das DTM als digital prozessierbare Information in Form von Punktinformationen, welche mindestens eine folgender Informationen enthält:
o x,y,z Koordinaten,
o Punktverbindungsinformationen,
o Intensitätsinformationen und
o Farbinformationen.

9. Beobachtungsgerät nach einem der Ansprüche 1 bis 7,
**dadurch gekennzeichnet, dass**
der Datenspeicher das DTM als digital prozessierbare Information in Form von Höhendaten in einem Rasterdatenformat gespeichert aufweist.

10. Beobachtungsgerät nach einem der Ansprüche 1 bis 9,
**dadurch gekennzeichnet, dass**
die Sensorik mindestens einen Global Positioning System (GPS) Sensor und/oder mindestens einen digitalen magnetischen Kompass (DMC) zur initialen groben Bestimmung der räumlichen Lage des Beobachtungsgerätes aufweist.

11. Beobachtungsgerät nach einem der Ansprüche 1 bis 10,
**aufweisend**
ein staub- und/oder stoss- und/oder spritzwassergeschütztes Gehäuse.

12. Beobachtungsgerät nach einem der Ansprüche 1 bis 11,
**aufweisend**
einen Datentransceiver zum drahtlosen Empfangen und Senden von DTM Daten, wobei empfangene DTM Daten mittels der Auswerteeinheit im Datenspeicher gespeichert werden und DTM Daten zum Senden mittels der Auswerteeinheit vom Datenspeicher abgerufen und zum Senden bereitgestellt werden.

13. Beobachtungsgerät nach einem der Ansprüche 1 bis 12,
**dadurch gekennzeichnet, dass**
die ermittelten simulierten Bildpositionen einer direkten Sicht durch ein Fernrohr des Beobachtungsgerätes überlagert werden und diese direkte, überlagerte Sicht benutzt wird zur Prüfung auf das Vorhandensein eines Terrainübergangs an den berechneten Bildpositionen.

14. Beobachtungsgerät nach einem der Ansprüche 1 bis 12,
**dadurch gekennzeichnet, dass**
simulierte Abbildungen von Terrainübergängen, insbesondere basierend auf einem ermittelten Klassifikatorbild oder den berechneten Bildpositionen, der direkten Sicht durch ein Fernrohr des Beobachtungsgerätes überlagert werden und diese direkte, überlagerte Sicht benutzt wird zur Prüfung auf das Vorhandensein eines Terrainübergangs an den berechneten Bildpositionen.

15. Beobachtungsgerät nach einem der Ansprüche 1 bis 14,
**dadurch gekennzeichnet, dass**
das Beobachtungsgerät eine Befestigungsvorrichtung aufweist und über besagte Befestigungsvorrichtung fest mit einem Objekt insbesondere einem Helm, einem Tragegurt, einem Stativ, einem Fahrzeug, einem Flugobjekt verbunden ist und nach einer Referenzierung einer räumlichen Lage des Objekts mit einer räumlichen Lage des Beobachtungsgerätes die räumliche Lage des Objekts basierend auf der festgelegten/bestimmten räumlichen Lage des Beobachtungsgerätes festgelegt/bestimmt wird.

## Claims

1. Observation device, in particular field glasses designed as binoculars or a monocular, having a fully automatic map-referenced location determination functionality, comprising
• a camera (8) having an objective lens (2) and a camera sensor (3) for recording an image of a terrain surrounding the camera as a camera image,
• a data memory for storing program data and a digital terrain model (DTM) (4), wherein the DTM contains at least parts of the surrounding terrain as spatial, digitally processable information,
• a sensor system (5) for the rough initial determination of a spatial location of the observation device, wherein the spatial location comprises an item of position information and/or an item of orientation information,
• an analysis unit (6) having data processing functionality, image data processing functionality, and sensor signal analysis functionality, configured for the purpose of
□ carrying out a rough initial determination of the spatial location of the observation device by means of analysis of signals of the sensor system (5), and
□ ascertaining, from the stored spatial information of the DTM, simulated image positions of terrain transitions potentially detectable by the camera (8), in relation to the initial roughly determined spatial location of the observation device, and
• a display screen (7),
**characterized in that**
the analysis unit (6) is configured for the purpose of
• at the ascertained simulated image positions, the recorded camera image is automatically checked for a presence of a depiction of a terrain transition, wherein the initial roughly determined spatial location of the observation device and accordingly the ascertained simulated image positions of potentially detectable terrain transitions are virtually varied within defined tolerances, in particular based on a previously ascertained result of the automatic check, and
• the automatic check is repeated in the scope of an optimization, in particular with variation of the respective virtual spatial location and the simulated image positions, and the spatial location of the observation device is established/determined as an optimization result based thereon.

2. Observation device according to Claim 1,
**characterized in that**
in the automatic check of the recorded camera image for the presence of a depiction of a terrain transition, the analysis unit also takes into consideration the distance of the respective terrain transition from the camera.

3. Observation device according to Claim 1 or 2,
**characterized in that**
the respective ascertained simulated image positions are displayed on the display screen (7) overlaid on the camera image, in particular wherein a profile of the automatic check is visually represented.

4. Observation device according to Claim 3,
**characterized in that**
the observation device comprises input means and a user can terminate the automatic check by means of the input means, and/or repeat it, based on the simulated image positions displayed on the display screen and overlaid on the camera image.

5. Observation device according to Claim 4,
**characterized in that**
the user can change the automatic check by means of the input means by way of a manual adaptation of the defined tolerance values, to determine/establish the spatial location of the observation device again.

6. Observation device according to Claim 4 or 5,
**characterized in that**
the rough initial determination of the spatial location of the observation device carried out by means of the analysis unit can be adapted before the automatic check by the user by means of the input means, in particular in such a way that the initial roughly determined location is manually determined based on the ascertained simulated image positions overlaid on the camera image.

7. Observation device according to any one of Claims 1 to 6,
**characterized in that**
the analysis unit is designed for the purpose of preparing a classifier image from the recorded camera image, wherein parameters, corresponding to the probability of the presence of a depiction of a terrain transition at said recorded image position, are assigned to recorded image positions in the classifier image, and the corresponding parameters are represented visually as corresponding brightness values and the virtual variation of the spatial location of the observation device and accordingly of the ascertained simulated image positions of potentially detectable terrain transitions is carried out based on a correspondence check of the classifier image with the ascertained simulated image positions.

8. Observation device according to any one of Claims 1 to 7,
**characterized in that**
the data memory contains the DTM as digitally processable information in the form of items of point information, which contain at least one of the following items of information:
o x, y, z coordinates,
o items of point connection information,
o items of intensity information, and
o items of color information.

9. Observation device according to any one of Claims 1 to 7,
**characterized in that**
the data memory comprises the DTM as digitally processable information in the form of height data stored in a scanning data format.

10. Observation device according to any one of Claims 1 to 9,
**characterized in that**
the sensor system comprises at least one global positioning system (GPS) sensor and/or at least one digital magnetic compass (DMC) for the initial rough determination of the spatial location of the observation device.

11. Observation device according to any one of Claims 1 to 10, **comprising**
a housing protected from dust and/or impact and/or sprayed water.

12. Observation device according to any one of Claims 1 to 11, **comprising**
a data transceiver for wirelessly receiving and transmitting DTM data, wherein received DTM data are stored by means of the analysis unit in the data memory and DTM data for transmission are retrieved by means of the analysis unit from the data memory and provided for transmission.

13. Observation device according to any one of Claims 1 to 12,
**characterized in that**
the determined simulated image positions are overlaid on a direct view through a telescope of the observation device and this direct, overlaid view is used to check for the presence of a terrain transition at the computed image positions.

14. Observation device according to any one of Claims 1 to 12,
**characterized in that**
simulated depictions of terrain transitions, in particular based on an ascertained classifier image or the computed image positions, are overlaid on the direct view through a telescope of the observation device and this direct, overlaid view is used to check for the presence of a terrain transition at the computed image positions.

15. Observation device according to any one of Claims 1 to 14,
**characterized in that**
the observation device comprises a fastening device and is fixedly connected via said fastening device to an object, in particular a helmet, a carrying belt, a tripod, a vehicle, or a flying object and after a referencing of a spatial location of the object with a spatial location of the observation device, the spatial location of the object is established/determined based on the established/determined spatial location of the observation device.

## Revendications

1. Appareil d'observation, notamment lorgnette binoculaire ou monoculaire, doté d'une fonctionnalité entièrement automatique de détermination de position sur une carte, comportant :
• une caméra (8) dotée d'un objectif (2) et d'un capteur de caméra (3) destiné à prendre une image d'un terrain environnant la caméra, sous forme d'une image de caméra,
• un enregistreur de données destiné à enregistrer des données de programme et un modèle numérique du terrain (DTM) (4), ledit DTM comprenant au moins des parties du terrain environnant sous forme d'informations spatiales susceptibles d'être traitées numériquement,
• un dispositif de détection (5) destiné à effectuer une détermination initiale grossière d'une position de l'appareil d'observation dans l'espace, ladite position dans l'espace comportant une information de position et/ou une information d'orientation,
• une unité d'évaluation (6) dotée d'une fonctionnalité de traitement des données, de traitement de données d'image et d'évaluation du signal de détection, conçue pour :
□ effectuer une détermination initiale grossière de la position de l'appareil d'observation dans l'espace, au moyen de l'évaluation de signaux du dispositif de détection (5), et
□ obtenir, à partir des informations spatiales enregistrées du DTM, des profils simulés de transitions de terrain potentiellement détectables par la caméra (8) et se rapportant à la position de l'appareil d'observation initialement déterminée de façon grossière dans l'espace, et
• un écran (7),
**caractérisé en ce que**
l'unité d'évaluation (6) est conçue pour :
• vérifier automatiquement, sur l'image de caméra prise et à l'emplacement des profils simulés obtenus, la présence d'une représentation d'une transition de terrain, sachant qu'il s'effectue une variation virtuelle, dans des tolérances définies, de la position de l'appareil d'observation initialement déterminée de façon grossière dans l'espace et, par conséquent, des profils simulés obtenus de transitions de terrain potentiellement détectables, notamment à partir d'un résultat de la vérification automatique préalablement obtenu, et
• répéter la vérification automatique dans le cadre d'une optimisation, notamment avec une variation de ladite position virtuelle dans l'espace et des profils simulés, et à partir de cela, en tant que résultat de l'optimisation, fixer/déterminer la position de l'appareil d'observation dans l'espace.

2. Appareil d'observation selon la revendication 1,
**caractérisé en ce que**
lors de la vérification automatique, sur l'image de caméra prise, de la présence d'une représentation d'une transition de terrain, l'unité d'évaluation tient compte de la distance entre ladite transition de terrain et la caméra.

3. Appareil d'observation selon la revendication 1 ou 2,
**caractérisé en ce que**
les profils simulés obtenus sont affichés à l'écran (7) et superposés à l'image de caméra, le déroulement de la vérification automatique étant notamment représenté visuellement.

4. Appareil d'observation selon la revendication 3,
**caractérisé en ce que**
l'appareil d'observation présente des moyens d'entrée et un utilisateur peut, par le biais desdits moyens d'entrée, interrompre et/ou répéter la vérification automatique au vu des profils simulés affichés à l'écran et superposés à l'image de caméra.

5. Appareil d'observation selon la revendication 4,
**caractérisé en ce que**
par le biais des moyens d'entrée, l'utilisateur peut modifier la vérification automatique en adaptant manuellement les valeurs de tolérance définies, afin de déterminer/fixer à nouveau la position de l'appareil d'observation dans l'espace.

6. Appareil d'observation selon la revendication 4 ou 5,
**caractérisé en ce que**
la détermination initiale grossière, par l'unité d'évaluation, de la position de l'appareil d'observation dans l'espace peut être adaptée par l'utilisateur, par le biais des moyens d'entrée, avant la vérification automatique, notamment afin que la détermination initiale grossière de la position soit manuelle et repose sur les profils simulés obtenus et superposés à l'image de caméra.

7. Appareil d'observation selon l'une des revendications 1 à 6,
**caractérisé en ce que**
l'unité d'évaluation est conçue pour créer une image de classificateur à partir de l'image de caméra prise ; des valeurs caractéristiques étant attribuées aux profils enregistrés dans l'image de classificateur, en correspondance à la probabilité de présence d'une représentation d'une transition de terrain à l'emplacement dudit profil enregistré ; les valeurs caractéristiques correspondantes étant représentées visuellement en tant que valeurs de luminosité correspondantes ; la variation virtuelle de la position de l'appareil d'observation dans l'espace et, par conséquent, des profils simulés obtenus de transitions de terrain potentiellement détectables reposant sur une vérification de coïncidence de l'image de classificateur et desdits profils simulés obtenus.

8. Appareil d'observation selon l'une des revendications 1 à 7,
**caractérisé en ce que**
l'enregistreur de données contient le DTM en tant qu'informations susceptibles d'être traitées numériquement, sous forme d'informations de points, qui contiennent au moins une des informations suivantes :
▪ des coordonnées x, y, z,
▪ des informations de liens entre les points
▪ des informations d'intensité et
▪ des informations de couleur.

9. Appareil d'observation selon l'une des revendications 1 à 7,
**caractérisé en ce que**
l'enregistreur de données comporte le DTM en tant qu'informations susceptibles d'être traitées numériquement, sous forme de données de hauteur dans un format de données de trame.

10. Appareil d'observation selon l'une des revendications 1 à 9,
**caractérisé en ce que**
le dispositif de détection présente au moins un détecteur à système de positionnement par satellites (GPS) et/ou au moins un compas magnétique numérique (DMC) destiné à effectuer une détermination initiale grossière de la position de l'appareil d'observation dans l'espace.

11. Appareil d'observation selon l'une des revendications 1 à 10,
**présentant**
un boîtier résistant à la poussière et/ou aux chocs et/ou aux éclaboussures d'eau.

12. Appareil d'observation selon l'une des revendications 1 à 11,
**présentant**
un émetteur-récepteur de données destiné à recevoir et à émettre des données DTM sans fil, les données DTM reçues étant enregistrées dans l'enregistreur de données au moyen de l'unité d'évaluation, et les données DTM à émettre étant lues dans l'enregistreur de données par l'unité d'évaluation et préparées pour l'émission.

13. Appareil d'observation selon l'une des revendications 1 à 12,
**caractérisé en ce que**
les profils simulés obtenus sont superposés à ce qui est vu directement par une lorgnette de l'appareil d'observation, et cette vision directe avec superposition est utilisée pour vérifier la présence d'une transition de terrain à l'emplacement des profils calculés.

14. Appareil d'observation selon l'une des revendications 1 à 12,
**caractérisé en ce que**
les simulations de représentations de transitions de terrain, reposant notamment sur une image de classificateur obtenue ou sur les profils calculés, sont superposées à ce qui est vu directement par une lorgnette de l'appareil d'observation, et cette vision directe avec superposition est utilisée pour vérifier la présence d'une transition de terrain à l'emplacement des profils calculés.

15. Appareil d'observation selon l'une des revendications 1 à 14,
**caractérisé en ce que**
l'appareil d'observation présente un dispositif de fixation et ledit dispositif de fixation le lie fermement à un objet, notamment un casque, une ceinture, un trépied, un véhicule, un objet volant, et après un référencement de la position de l'objet dans l'espace vis-à-vis de la position de l'appareil d'observation dans l'espace, la position de l'objet dans l'espace est fixée/déterminée à partir de la position fixée/déterminée de l'appareil d'observation dans l'espace.
